# EUROPÄISCHE PATENTSCHRIFT

(11) **EP 0 808 556 B1**
(45) Veröffentlichungstag und Bekanntmachung des Hinweises auf die Patenterteilung: **18.10.2000**
(21) Anmeldenummer: 97107833.2
(22) Anmeldetag: 14.05.1997
(51) Int. Cl.: A01B 73/00, A01B 73/04, A01B 71/06, A01B 33/08

(54) **Aufhängung und Antriebsanordnung für ein- oder beidseitig an einem Trägerfahrzeug angebrachte Arbeitsaggregate**
Suspension and driving arrangement for implements mounted on one or either side of a carrier vehicle
Arrangement de suspension et d'entraînement pour machines montées à un ou deux côtés d'un véhicule porteur

(30) Priorität: 20.05.1996 DE 19620063
(43) Veröffentlichungstag der Anmeldung: 26.11.1997
(73) Patentinhaber: Maschinenfabrik Bernard Krone GmbH, 48480 Spelle (DE)
(72) Erfinder: Krone, Bernard, 48480 Spelle (DE); Horstmann, Josef, Dipl.-Ing., 49479 Ibbenbüren (DE); Ahler, Wilhelm, 48703 Stadtlohn (DE)

(56) Entgegenhaltungen:
- EP-A- 0 068 560
- EP-A- 0 073 360
- EP-A- 0 422 721
- EP-A- 0 706 750
- DE-A- 1 916 430
- DE-C- 4 409 113
- GB-A- 851 894

## Beschreibung

Die Erfindung betrifft eine Aufhängung und Antriebsanordnung für ein- oder beidseitig an einem Trägerfahrzeug angebrachte Arbeitsaggregate aus dem landwirtschaftlichen und kommunalen Bereich nach dem Oberbegriff des Anspruches 1. Dazu zählen beispielsweise Mähwerke, Mulcher oder Kehrgeräte, die als Einzelaggregate oder in einer Kombination von Arbeitsaggregaten in ihrer Arbeitsstellung über große Arbeitsbreiten verfügen. Derartige Aufhängungen und Antriebsanordnungen sind insbesondere an Mähwerken in zahlreichen Ausführungsformen bekannt.

In der DE 44 05 858 C1 wird eine Aufhängung für ein- oder beidseitig an einem Trägerfahrzeug angebrachte Arbeitsaggregate vorgeschlagen, bei der die Arbeitsaggregate über einen schwenkbar am Trägerfahrzeug gelagerten und sich in Arbeitsstellung quer zur Fahrtrichtung erstreckenden Ausleger sowie über einen sich daran anschließenden Tragrahmen und einer nachfolgenden, gelenkigen und auf der Oberwand der Arbeitsaggregate angebrachten Aufhängung in einem gewissen Maße um eine in Fahrtrichtung zeigende, horizontale Drehachse pendelnd aufgehängt sind. Als Verbindungselement des in etwa mittig geteilten Tragrahmens ist dabei eine Überlastkupplung vorgesehen, so daß die Arbeitsaggregate beim Auftreffen auf unüberwindliche Hindernisse um eine vertikal ausgerichtete Schwenkachse der Überlastkupplung nach hinten wegschwenken können oder in einer schräg nach hinten gerichteten Anstellung genutzt werden. Somit lassen derartige Aufhängungen eine Schwenkbewegung der Arbeitsaggregate, insbesondere bei Mähwerken um eine in Richtung ihrer längsten Ausrichtung gerichteten Schwenkachse zur Schnitthöhenverstellung der Schneidelemente nicht zu.

Der Antrieb der vorstehend beschriebenen Arbeitsaggregate erfolgt von einem zentralen Verteilergetriebe des Trägerfahrzeuges aus über mit Kreuzgelenken versehene Gelenkwellen zu einem Eingangsgetriebe der jeweiligen Arbeitsaggregate. Die Anordnung der Eingangsgetriebe an der jeweiligen, dem Trägerfahrzeug zugewandten Seite der Arbeitsaggregate läßt auf einen einseitig angebrachten Antrieb der Arbeitsaggregate schließen, so daß dadurch beispielsweise bei Mähwerken eine optimale Anpassung der Auflagekraft auf dem Boden nachteilig beeinflußt wird. Weiterhin ist es bei einem Antrieb der Arbeitsaggregate über Gelenkwellen nachteilig, daß eine Überführung der Arbeitsaggregate aus einer in etwa horizontalen Arbeits- und Betriebstellung in eine annähernd vertikale Transportstellung erst beim Stillstand der Arbeitswerkzeuge der Arbeitsaggregate möglich ist, da sonst Beschädigung an den Kreuzgelenken der Gelenkwellen auftreten können. Beim Betrieb der Arbeitsaggregate in einer schräg nach hinten gerichteten Anstellung kommt es außerdem als Folge der ungleichen Beugungswinkel der Kreuzgelenke zu einem ungleichförmigen Antrieb der Arbeitsaggregate.

Aufgabe der Erfindung ist es, eine Aufhängung für an einem Trägerfahrzeug angebrachte Arbeitsaggregate, insbesondere eine Mäheinheit oder eine Mäh- und Aufbereitungseinheiten zur Ernte von landwirtschaftlichem Halmgut zu schaffen, welche bei mittiger Aufhängung eines Arbeitsaggregates als Einzelaggregat oder in einer Kombination von Arbeitsaggregaten an einem Trägerfahrzeug neben einer optimalen Bodenanpassung und einer einfachen Schnitthöhenverstellung eine in einfacher Art und Weise seitlich veränderbare Schwadablage ermöglicht. Weiterhin soll eine kompakte und bedienungsfreundliche Antriebanordnung für eine Mäh- und Aufbereitungseinheit zur Verfügung gestellt werden.

Diese Aufgabe wird erfindungsgemäß durch die im kennzeichnenden Teil des Anspruches 1 aufgeführten Merkmale gelöst. Hinsichtlich wesentlicher weiterer Ausgestaltungen der Erfindung wird auf die Ansprüche 2 bis 41 verwiesen.

Die schwenkbewegliche Anbringung eines Arbeitsaggregates an einem mit dem Trägerfahrzeug verbundenen Ausleger- und Tragarm erfolgt erfindungsgemäß über eine Gelenkanordnung, die vorzugsweise als eine zentral zum Arbeitsaggregat gelegene Einheit ausgebildet ist und die eine Einleitung der Antriebskraft der Arbeitsaggregate in ihrem mittleren Zentralbereich zuläßt. Neben der in etwa vertikal ausgerichteten Schwenkachse verfügt die Gelenkanordnung über weitere Schwenkachsen, welche einen Schwenk- bzw. Arretierungsvorgang der Arbeitsaggregate um eine in Fahrt- und Arbeitsrichtung gerichtete Schwenkachse sowie um eine in Richtung der längsten Ausrichtung der Arbeitsaggregate gerichtete Achse ermöglichen. In einer Ausführung der Arbeitsaggregate als Mäh- und Aufbereitungseinheit zur Ernte von landwirtschaftlichen Halmgut dient beispielsweise die in Fahrt- und Arbeitsrichtung gerichtete Schwenkachse der Bodenanpassung, während durch eine Schwenkbewegung um die in Richtung der längsten Ausrichtung gerichtete Achse eine Schnitthöhenverstellung des Mähwerkes der Mäh- und Aufbereitungseinheit durchgeführt werden kann. Mittels einer Schwenkbewegung der als eine Mäh- und Aufbereitungseinheit ausgeführten Arbeitsaggregate um die in etwa vertikale Schwenkachse der Gelenkanordnung ist es einerseits möglich, in einfacher Art und Weise die seitliche Schwadablage der Mäh- und Aufbereitungseinheit als Einzelaggregat oder in einer Kombination von Mäh- und Aufbereitungseinheiten zu verändern. Andererseits kann durch die Schwenkbewegung einer oder mehrerer Mäh- und Aufbereitungseinheiten in einer Kombination an einem Trägerfahrzeug, beispielsweise in einer Kombination aus beidseitig zwischen den Vorder- und Hinterrädern des Trägerfahrzeuges angebrachten und einer vor den Vorderrädern angeordneten Mäh- und Aufbereitungseinheit die Überdeckung zwischen den Arbeitsbreiten des frontseitigen und den Arbeitsbreiten der seitlichen Mäh- und Aufbereitungseinheiten bei einer Kurvenfahrt des Trägerfahrzeuges positiv beeinflußt werden. Das bedeutet, die Schwenkbewegung der dem Krümmungsmittelpunkt der durchfahrenen Kurvenbahn zugewandten Mäh- und Aufbereitungseinheit in einer der Kurvenkrümmung entgegen gerichteten Drehrichtung trägt zur Erhaltung der in Geradeausfahrt des Trägerfahrzeuges vorhandenen Grundüberdeckung zwischen den Arbeitsaggregaten bei.

Zur Erreichung einer optimalen Bodenanpassung der Mäh- und Aufbereitungseinheit liegt die in Fahrt- und Arbeitsrichtung gerichtete Schwenkachse der Gelenkanordnung in einer annähernd durch den Schwerpunkt der Mäh- und Aufbereitungseinheit verlaufenden, vertikalen und parallel zu einer vertikalen Längsmittelebene des Trägerfahrzeuges ausgerichteten Schnittebene. Um einen gleichförmigen Antrieb der Mäh- und Aufbereitungseinheit zu gewährleisten, ist es üblicherweise vorgesehen, daß sich die drei Schwenkachsen der Gelenkanordnung in einem Kreuzungspunkt schneiden. Vorteilhafter ist es jedoch, die in Richtung der längsten Ausrichtung der Mäh- und Aufbereitungseinheit gerichtete Schwenkachse so anzuordnen, daß der Schnittpunkt dieser Schwenkachse mit der in etwa vertikalen Schwenkachse über dem Schnittpunkt der in etwa vertikalen Schwenkachse mit der in Fahrt- und Arbeitsrichtung gerichteten Schwenkachse liegt. Dadurch ist es möglich, den Beugungswinkel eines Kreuzgelenkes im Antrieb zu reduzieren. Zur Lage der Gelenkanordnung bezüglich der Mäh- und Aufbereitungseinheit ist noch zu erwähnen, daß der Schnittpunkt der in etwa vertikalen Schwenkachse und der in Fahrt- und Arbeitsrichtung gerichteten Schwenkachse bzw. der Kreuzungspunkt aller drei Schwenkachsen in einer durch die Mittelpunkte der Schneidelemente der Mäh- und Aufbereitungseinheit verlaufenden, in etwa vertikalen Schnittebene liegen oder dieser bezüglich der Fahrt- und Arbeitsrichtung auch nachgeordnet sein kann.

Im wesentlichen besteht die Gelenkanordnung aus einem am äußeren Ende eines Ausleger- und Tragarmes um die in Fahrt- und Arbeitsrichtung ausgerichtete Schwenkachse pendelnd gelagerten, vorderen Abschnitt und aus einem um die in Richtung der längsten Ausrichtung der Mäh- und Aufbereitungseinheit ausgerichtete Schwenkachse schwenkbar an der Mäh- und Aufbereitungseinheit angebrachten, hinteren Abschnitt, wobei beide Abschnitte um die vertikale Schwenkachse schwenk- und arretierbar miteinander verbunden sind. Der vordere Abschnitt ist dabei als kastenähnlicher Tragholm mit aus diesem hinausragenden Traglaschen ausgebildet, während der hintere Abschnitt aus einem viereckförmigen Tragbügel besteht. Als Stellglied zur schwenkbeweglichen Verstellung der Mäh- und Aufbereitungseinheiten um die in Richtung der längsten Ausrichtung gerichtete Schwenkachse zur Schnitthöhenverstellung ist eine Verstellspindel oder eine ähnliche Verstelleinrichtung vorstellbar. Die schwenkbewegliche Verstellung der Mäh- und Aufbereitungseinheiten um die vertikale Schwenkachse kann mittels einer Verstellspindel manuell und ungeregelt oder über eine Kolben-Zylinder-Anordnung in Abhängigkeit von Fahr- und Arbeitsparametern geregelt erfolgen. Eine geregelte Verstellung ist aber auch durch elektrische Stellmittel, wie beispielsweise durch einen elektrischen Linearantriebsmotor erreichbar.

Zur Einleitung einer Antriebskraft wird die Gelenkanordnung von einer Antriebsverbindung zu einem Hauptgetriebe durchsetzt, welche sich im mittleren Bereich der Mäh- und Aufbereitungseinheit zwischen zwei geteilten Abschnitten eines Aufbereiters befindet. Das Hauptgetriebe sowie die vor- und nachgeordnete, im mittleren Bereich der Mäh- und Aufbereitungseinheit untergebrachte Antriebsanordnung zeichnet sich durch einen kompakten und montagefreundlichen Aufbau aus. Dazu zählt die mögliche Nutzung des Hauptgetriebe der Mäh- und Aufbereitungseinheit sowohl im Front-, Seiten- und Heckanbau. Das bedeutet, daß das Hauptgetriebe eine annähernd in und eine annähernd entgegen der Fahrt- und Arbeitsrichtung zeigende Eingangswelle aufweist, von denen wahlweise eine angetrieben wird. Die Eingangswellen können jedoch vorzugsweise als eine Durchgangswelle ausgeführt sein. Desweiteren ist das Hauptgetriebe an der Mäh- und Aufbereitungseinheit derartig angeordnet, daß die Mittelachse der zum Hauptgetriebe führenden und ein Doppelkreuzgelenk beinhaltenden Antriebsverbindung in einer quer zur Fahrt- und Arbeitsrichtung ausgerichteten Grundstellung der Mäh- und Aufbereitungseinheit mit der in Fahrt- und Arbeitsrichtung gerichteten Schwenkachse der Gelenkanordnung übereinstimmt. Eine weitere Antriebsverbindung führt vom Hauptgetriebe aus zu einer im mittleren Bereich und bezüglich der Fahrt- und Arbeitsrichtung hinter den Schneidelementen des Mähwerkes angeordneten und in etwa vertikalen Antriebswelle des Mähwerkes. Zum Antrieb des Aufbereiters der Mäh- und Aufbereitungseinheit ist ein ein- oder beidseitig vom Hauptgetriebe anbringbarer Riementrieb vorgesehen.

Als weitere Besonderheit ist der mit unterschiedlichen Antriebsdrehzahlen antreibbare Aufbereiter der Mäh- und Aufbereitungseinheit zu nennen. Dabei ist es vorgesehen, die Antriebsverzweigung zum Antrieb des Aufbereiters mit zumindest zwei wählbaren Übersetzungsstufen auszubilden, wobei zwischen den Übersetzungen über einen von außerhalb des Hauptgetriebes angebrachten Schalthebel umgeschaltet werden kann. Die Antriebsverzweigung zum Antrieb des Aufbereiters wird vorzugsweise von zwei Kegelradstufen gebildet, wobei den Kegelrädern auf der Ausgangswelle zum Antrieb des Aufbereiters jeweils eine Schaltkupplung zugeordnet ist, welche als Klauenkupplung ausgeführt sein kann.

Eine detaillierte Beschreibung des Gegenstandes der Erfindung erfolgt nun anhand eines Ausführungsbeispieles. In den dazugehörigen Zeichnungen stellen im einzelnen dar:
- Fig. 1: ein schematisch dargestelltes Trägerfahrzeug mit einer erfindungsgemäßen Arbeitsaggregatekombination mit als Mäh- und Aufbereitungseinheiten ausgeführten Arbeitsaggregaten in Arbeitsstellung;
- Fig. 2: eine teilweise abgebrochene, perspektivische Darstellung einer Mäh- und Aufbereitungseinheit in Arbeitstellung mit Blickrichtung aus einer hinter der Mäh- und Aufbereitungseinheit befindlichen Position;
- Fig. 3: eine teilweise abgebrochene, perspektivische Darstellung einer Mäh- und Aufbereitungseinheit in Arbeitstellung mit Blickrichtung aus einer vor der Mäh- und Aufbereitungseinheit befindlichen Position;
- Fig. 4: eine teilweise abgebrochene, perspektivische Schnittdarstellung einer Mäh- und Aufbereitungseinheit in Arbeitstellung mit einer quer zur längsten Ausrichtung der Mäh- und Aufbereitungseinheit gerichteten mittleren Schnittebene;
- Fig. 5: eine vergrößerte, perspektivische Schnittdarstellung des Hauptgetriebes des Arbeitsaggregates aus Fig.4;
- Fig. 6: eine teilweise abgebrochene, perspektivische Darstellung einer Mäh- und Aufbereitungseinheit in Arbeitstellung mit Blickrichtung aus einer hinter der Mäh- und Aufbereitungseinheit befindlichen Position mit teilweise auseinandergezogenen Einzeldarstellungen;

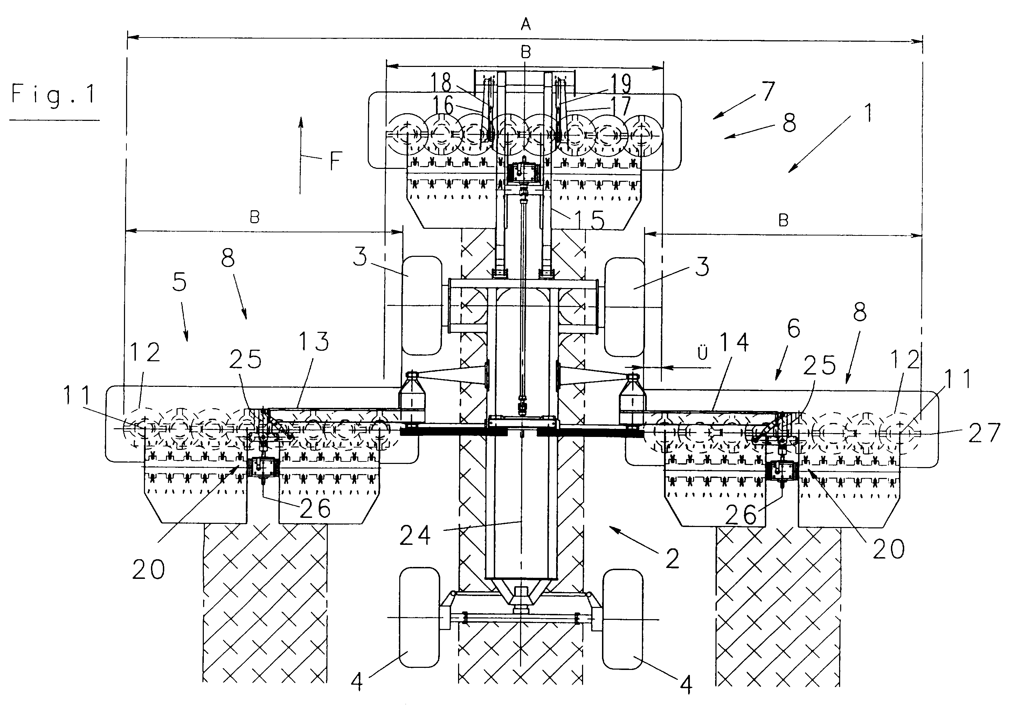

Eine gattungsgemäße Arbeitsaggregatekombination 1 ist in Fig.1 dargestellt und besteht aus beidseitig an einem selbstfahrenden Trägerfahrzeug 2 zwischen den Vorder- und Hinterräder 3,4 angeordneten Arbeitsaggregaten 5,6 und einem unmittelbar vor den Vorderrädern 3 angebrachten Arbeitsaggregat 7. Bei der Arbeitsaggregatekombination 1 handelt es sich um ein Ausführungsbeispiel, bei dem als Arbeitsaggregate 5,6,7 eine Mäh- und Aufbereitungseinheit 8 zur Ernte von landwirtschaftlichem Halmgut eingesetzt ist. Eine derartige Mäh- und Aufbereitungseinheit 8 setzt sich aus einem Mähwerk 9 sowie aus einem Aufbereiter 10 zusammen, wobei das Mähwerk 9 um in etwa vertikale Rotationachsen 11 rotierende und als Schneidelemente 12 ausgebildete Arbeitswerkzeuge umfaßt. Als Arbeitsaggregate 5,6,7 können aber auch Mulcher, Kehrgeräte oder dgl. Arbeitsaggregate mit völlig unterschiedlichen Arbeitswerkzeugen zur Anwendung kommen. Als Trägerfahrzeug 2 ist eine selbstfahrende Arbeits- und Antriebsmaschine vorgesehen, die eine Lenkung der Hinterräder 4 aufweist. Aus Gründen einer besseren Übersichtlichkeit ist das Trägerfahrzeug 2 nur schematisch dargestellt.

Die im Ausführungsbeispiel dargestellte Anordnung der Mäh- und Aufbereitungseinheiten 8 mit den jeweiligen Einzelarbeitsbreiten B ist so gewählt, daß bei einer den jeweiligen Einsatzverhältnissen entsprechenden, minimalen Überdeckung Ü der Arbeitsbreiten der beidseitig zwischen den Vorder- und Hinterrädern 3,4 angebrachten Mäh- und Aufbereitungseinheiten 8 und der Arbeitsbreite der vor den Vorderrädern 3 angeordneten Mäh- und Aufbereitungseinheit 8 eine durchgehende maximale Gesamtarbeitsbreite A der Arbeitsaggregatekombination 1 entsteht. Die beidseitig vom Trägerfahrzeug 2 angeordneten Mäh- und Aufbereitungseinheiten 8 sind dazu über schwenkbar am Trägerfahrzeug 2 gehalterte Ausleger- und Tragarme 13,14 mit dem Trägerfahrzeug 2 verbunden und können so in an sich bekannter Weise aus einer in etwa horizontalen Arbeits- und Betriebsstellung in eine annähernd vertikale Transportstellung und zurück überführt werden. Die frontseitige Mäh- und Aufbereitungseinheit 8 ist über einen höhenbeweglich mit dem Trägerfahrzeug 2 verbundenen Tragrahmen 15 sowie weiteren schwenkbeweglichen Lenkern 16,17 und hydraulischen Kolben-Zylinder-Anordnungen 18,19 aus der Arbeits- und Betriebsstellung in eine in etwa bodenparallele angehobene Transportstellung und zurück bringbar.

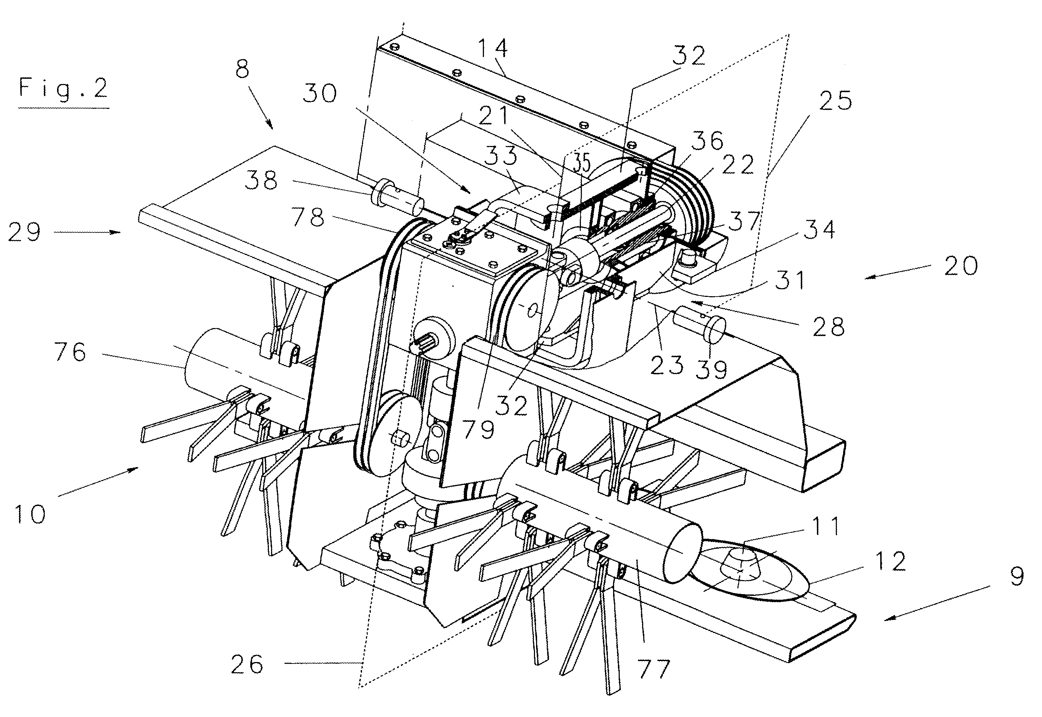

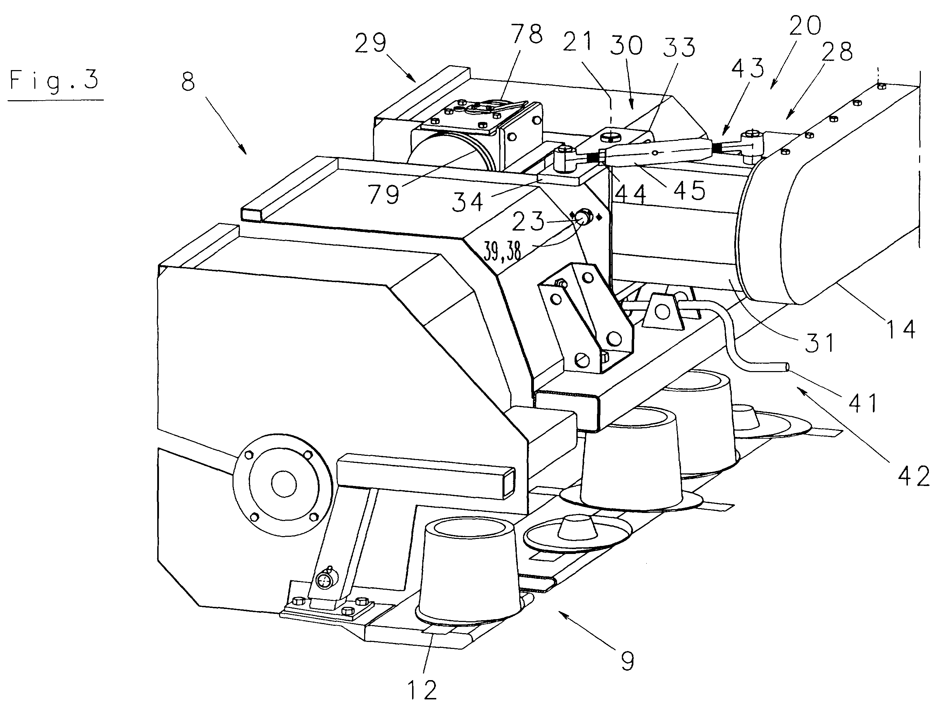

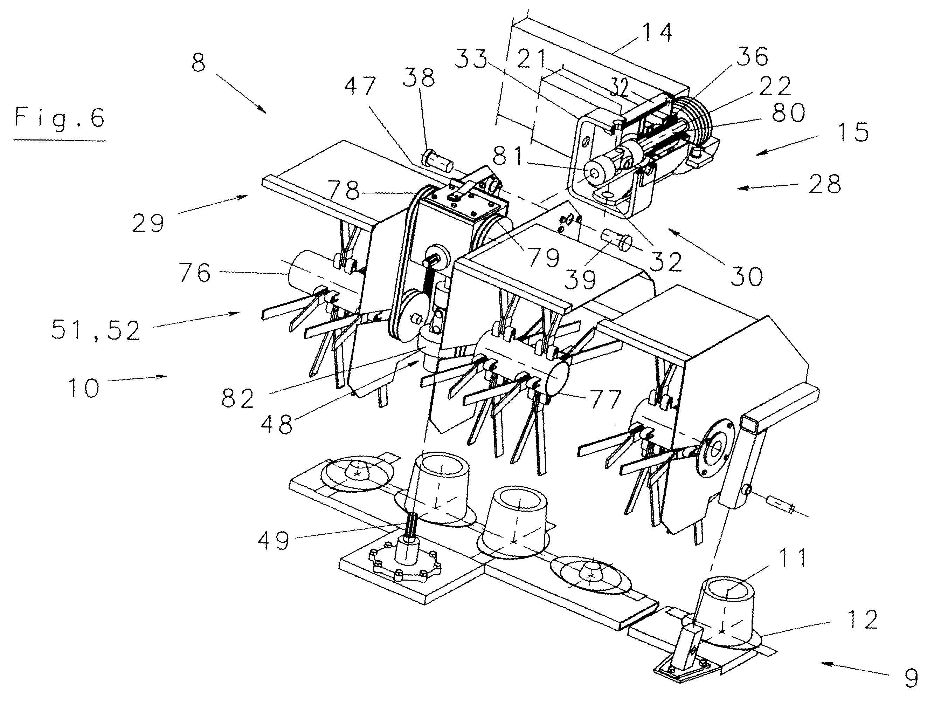

Aus in Fig.2,3 und 6 näher veranschaulichten, perspektivischen Darstellungen geht hervor, daß gemäß der Erfindung zur schwenkbeweglichen Halterung der Mäh- und Aufbereitungseinheit 8 eine als zentral zur Mäh- und Aufbereitungseinheit 8 gelegene Einheit ausgebildete Gelenkanordnung 20 vorgesehen ist, welche außerdem eine Einleitung einer Antriebskraft zum Antrieb der Mäh- und Aufbereitungseinheit 8 im mittleren Zentralbereich zuläßt. Neben einer in etwa vertikal ausgerichteten Schwenkachse 21 weist die Gelenkanordnung 20 eine weitere in Fahrt- und Arbeitsrichtung F des Trägerfahrzeuges 2 gerichtete Schwenkachse 22 und eine in Richtung der längsten Ausrichtung der Mäh- und Aufbereitungseinheit 8 gerichtete, horizontale Schwenkachse 23 auf. Die Gelenkanordnung 20 ist dabei derartig an der Mäh- und Aufbereitungseinheit 8 angebracht, daß die in Fahrt- und Arbeitsrichtung F gerichtete Schwenkachse 22 zumindest annähernd in einer durch den Schwerpunkt der Mäh- und Aufbereitungseinheit 8 verlaufenden, vertikalen und parallel zu einer vertikalen Längsmittelebene 24 des Trägerfahrzeuges 2 ausgerichteten Schnittebene 25 liegt (Fig.1), während die in etwa vertikale Schwenkachse 21 in einer vertikalen und quer zur längsten Ausrichtung der Mäh- und Aufbereitungseinheit 8 sich erstreckenden Mittelebene 26 der Mäh- und Aufbereitungseinheit 8 angeordnet ist. Um eine problemlose Antriebseinleitung der Mäh- und Aufbereitungseinheit 8 zu erreichen, ist die Lage der in Richtung der längsten Ausrichtung der Mäh- und Aufbereitungseinheit 8 gerichteten Schwenkachse 23 üblicherweise so gewählt, daß alle drei Schwenkachsen 21,22,23 sich in einem gemeinsamen Kreuzungspunkt schneiden. Vorteilhafter ist es jedoch, die in Richtung der längsten Ausrichtung der Mäh- und Aufbereitungseinheit 8 gerichtete Schwenkachse 23 über dem Schnittpunkt der Schwenkachsen 21,22 anzuordnen, da dadurch der Beugungswinkel in dem zur Mäh- und Aufbereitungseinheit 8 führenden Antrieb reduziert werden kann. Um die Lage der Gelenkanordnung 20 bezüglich der Mäh- und Aufbereitungseinheit 8 eindeutig festzulegen, bleibt noch zu erwähnen, daß der Schnittpunkt der in etwa vertikalen Schwenkachse 21 und der in Fahrt- und Arbeitsrichtung F gerichteten Schwenkachse 22 bzw. der Kreuzungspunkt aller drei Schwenkachsen 21,22,23 in einer durch die Mittelpunkte der Schneidelemente 12 der Mäh- und Aufbereitungseinheit 8 verlaufenden, in etwa vertikalen Schnittebene 27 (Fig.1) liegen oder dieser auch bezüglich der Fahrt- und Arbeitsrichtung F nachgeordnet sein kann.

Die Gelenkanordnung 20 setzt sich, wie aus Fig.2,3 und 6 hervorgeht, hauptsächlich aus einem im vorderen Abschnitt der Gelenkanordnung 20 um die in Fahrt- und Arbeitsrichtung F gerichtete Schwenkachse 21 frei pendelnd an einem der Ausleger- und Tragarme 13 oder 14 gelagerten ersten Tragelement 28 und aus einem im hinteren Abschnitt der Gelenkanordnung 20 an einem Traggestell 29 der Mäh- und Aufbereitungseinheit 8 um die in Richtung der längsten Ausrichtung der Mäh- und Aufbereitungseinheit 8 gerichtete Schwenkachse 23 gelagerten zweiten Tragelement 30 zusammen. Das erste Tragelement 28 ist dabei als ein kastenähnlicher Tragholm 31 mit aus diesem hinausragenden Traglaschen 32 ausgebildet, während das zweite Tragelement 30 aus einem viereckförmigen Tragbügel 33 mit einer Betätigungslasche 34 besteht. Zur schwenkbeweglichen Lagerung um die in Fahrt- und Arbeitsrichtung F gerichtete Schwenkachse 22 weist der kastenähnliche Tragholm 31 zwei Lagerstellen 35,36 auf, die auf einem mit dem Ausleger- und Tragarm 13 oder 14 verbundenen Lagerzapfen 37 aufgenommen sind. Zur schwenkbeweglichen Aufnahme des viereckförmigen Tragbügels 33 im Traggestell 29 der Mäh- und Aufbereitungseinheit 8 sind Lagerbolzen 38,39 vorgesehen, während zur Verbindung des kastenähnlichen Tragholmes 31 mit dem vierförmigen Tragbügel 33 Lagerbolzen 40 eingesetzt werden.
Zur schwenkbeweglichen Verstellung der Mäh- und Aufbereitungseinheit 8 um die in Richtung der längsten Ausrichtung gerichtete Schwenkachse 23, also zur Schnitthöheneinstellung der Schneidelemente 12 ist ein als Verstellspindel 41 mit einem Verstellgewinde ausgeführtes Stellglied 42 vorgesehen. Die Durchführung einer Schwenkbewegung der Mäh- und Aufbereitungseinheit 8 auf Lagerbolzen 40 um die in etwa vertikale Schwenkachse 21 kann manuell und ungeregelt oder in Abhängigkeit von Fahr- und Arbeitsparametern geregelt über Stellmittel 43 erfolgen. Eine manuelle und ungeregelte Betätigung kann beispielsweise durch die Verstellung einer an der Betätigungslasche 34 des viereckförmigen Tragbügels 33 angreifenden und durch eine Kontermutter 44 gesicherten Verstellspindel 45, die sich gegenüber dem kastenförmigen Tragholm 31 abstützt, eingeleitet werden. Zur geregelten Verstellung können vorzugsweise als hydraulische Kolben-Zylinder-Anordnungen oder elektrische Linearantriebsmotoren ausgebildete Stellmittel 43 verwendet werden.

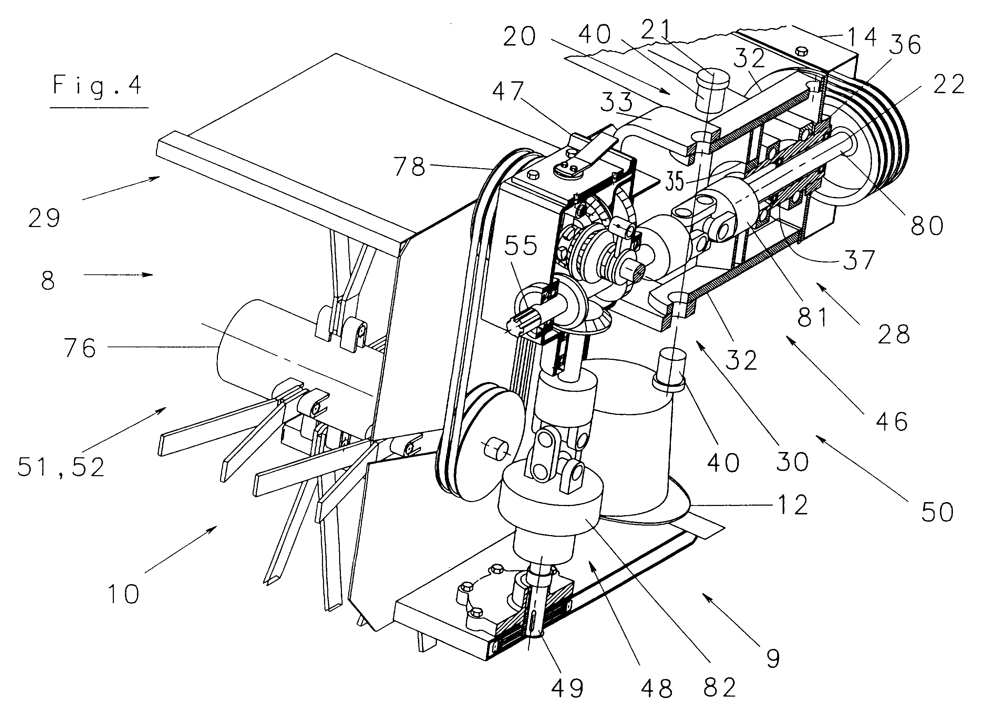

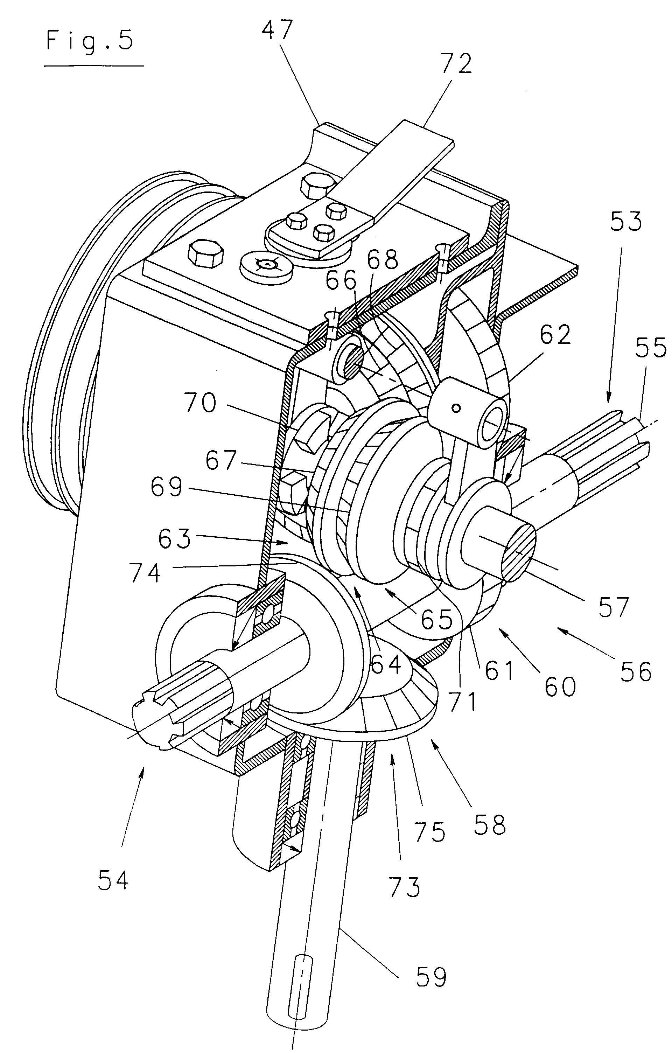

Die Einleitung einer Antriebskraft zum Antrieb der Mäh- und Aufbereitungseinheit 8 erfolgt über eine die Gelenkanordnung 20 durchsetzende Antriebsverbindung 46 zu einem Hauptgetriebe 47 und von dort aus über eine weitere Antriebsverbindung 48 zu einer Antriebswelle 49 des Mähwerkes 9 (Fig.4 und 5). Das Hauptgetriebe 47 sowie die Antriebsverbindungen 46,48 sind Teile einer Antriebsanordnung 50, die im mittleren Bereich der Mäh- und Aufbereitungseinheit 8 zwischen dem in zwei Abschnitten 51,52 aufgeteilten Aufbereiter 10 untergebracht ist. Mit dem Hauptgetriebe 47 steht eine Antriebseinrichtung zur Verfügung, welche zumindest eine in und eine entgegen der Fahrt- und Arbeitsrichtung F zeigende Eingangswelle 53,54 aufweist, von denen wahlweise eine angetrieben wird. Die Eingangswellen 53,54 können aber auch als eine Durchgangswelle 55 ausgebildet sein. Desweiteren zeichnet sich das Hauptgetriebe 47 durch eine erste Antriebsverzweigung 56 mit der sich daran anschließenden Ausgangswelle 57 zum Antrieb des Aufbereiters 10 sowie durch eine zweite Antriebsverzweigung 58 und einer nachfolgenden Ausgangswelle 59 zum Antrieb des Mähwerkes 9 der Mäh- und Aufbereitungseinheit 8 aus. Dabei beinhaltet die erste Antriebsverzweigung 56 eine Übersetzungsstufe 60 mit unveränderlicher Übersetzung, die von einer Stirnradstufe mit den Stirnrädern 61,62 gebildet wird und eine Übersetzungsstufe 63 mit veränderbarer Übersetzung, die ihrerseits aus zwei Kegelradstufen 64,65 mit den Kegelrädern 66,67,68,69 besteht. Eine Änderung der Antriebsdrehzahl des Aufbereiters 10 wird dadurch ermöglicht, daß den Kegelräder 67,69 auf der Ausgangswelle 57 Schaltkupplungen 70,71 zugeordnet sind, welche in diesem Ausführungsbeispiel als Klauenkupplungen ausgeführt sind und über einen Schalthebel 72 von außerhalb des Hauptgetriebes 47 schaltbar sind. Die zweite Antriebsverzweigung 58 zum Antrieb des Mähwerkes 9 weist eine weitere Kegelradstufe 73 mit den Kegelrädern 74,75 auf. Zur Übertragung einer Antriebskraft auf die Aufbereiterwalzen 76,77 des Aufbereiters 10 ist ein ein- oder beidseitig vom Hauptgetriebe 47 angebrachter Riementrieb 78,79 vorgesehen.

Die Anordnung des Hauptgetriebes 47 zur Mäh- und Aufbereitungseinheit 8 ist so gewählt, daß die Mittelachse der Hauptantriebswelle 80 der zum Hauptgetriebe 47 führenden Antriebsverbindung 46 mit der in Fahrt- und Arbeitsrichtung F gerichteten Schwenkachse 22 der Gelenkanordnung 20 übereinstimmt. Damit die Mäh- und Aufbereitungseinheit 8 immer mit einer gleichförmigen Drehbewegung angetrieben wird, enthält die Antriebsverbindung 46 als Verbindungselement zwischen der Hauptantriebswelle 80 und der Durchgangswelle 55 ein Doppelkreuzgelenk 81. Die zweite Antriebsverbindung 48 vom Hauptgetriebe 47 zum Mähwerk 9 führt vom Hauptgetriebe 47 aus in gerader Flucht zu der im mittleren Bereich des Mähwerkes 9 und bezüglich der Fahrt- und Arbeitsrichtung F hinter den Schneidelementen 12 angeordneten Antriebswelle 49. Zum Ausgleich etwaiger Fluchtungsfehler beinhaltet die Antriebsverbindung 48 ebenfalls ein Doppelkreuzgelenk 82.

Obwohl in den Zeichnungen und in der Beschreibung eine bevorzugte Ausführungsform dargelegt wurde, sind weitere Modifikationen und Ausführungsvarianten vorstellbar. So ist es beispielsweise denkbar, in der Antriebsverzweigung 56 (Fig.5) zum Antrieb des Aufbereiters 10 der Mäh- und Aufbereitungseinheit 8 eine Übersetzungsstufe mit einer stufenlos veränderbaren Übersetzung vorzusehen, so daß durch die Auswahl der Antriebsdrehzahl des Aufbereiter 9 aus einem Drehzahlbereich immer eine dem jeweiligen Erntegut bzw. den jeweiligen, geforderten Aufbereitungsverhältnissen optimal angepaßte Aufbereitung des Erntegutes erfolgen kann.

## Patentansprüche

1. Aufhängung und Antriebsanordnung für ein- oder beidseitig an einem Trägerfahrzeug angebrachte Arbeitsaggregate (5,6), insbesondere eine Mäheinheit oder eine Mäh- und Aufbereitungseinheit zur Ernte von landwirtschaftlichem Halmgut, bei der zur höhenbeweglichen Aufhängung eines jeden Arbeitsaggregates am Fahrgestell des Trägerfahrzeuges ein um eine annähernd in Fahrt- und Arbeitsrichtung (F) des Trägerfahrzeuges ausgerichtete Achse schwenkbar gelagerter Auslegerarm angeordnet ist, der zusammen mit einem Arbeitsaggregat (5 oder 6) mittels einer am Fahrgestell und am Auslegerarm angelenkten Kolben-Zylinder-Anordnung aus einer in etwa horizontalen Arbeitsstellung in eine nahezu vertikale Transportstellung überführbar ist, mit einer zwischen dem äußeren Ende des Auslegerarms und dem mittleren Bereich des Arbeitsaggregates (5,6) angebrachten Gelenkanordnung als Verbindungsglied mit einer in Fahrt- und Arbeitsrichtung (F) gerichteten Schwenkachse, dadurch gekennzeichnet, daß die Gelenkanordnung (20) als in der Mitte des sich quer zur Fahrt- und Arbeitsrichtung (F) erstreckenden Arbeitsaggregates (5,6) gelegene Einheit ausgebildet ist und neben der in Fahrt- und Arbeitsrichtung (F) gelegenen horizontalen Schwenkachse (22) zwei weitere Schwenkachsen (21 und 23) aufweist, die einen Schwenk- und Arretiervorgang der Arbeitsaggregate (5,6) bei Betrachtung in Arbeitsstellung um eine annähernd vertikal ausgerichtete Schwenkachse (21) und eine in Richtung der längsten Ausrichtung der Arbeitsaggregate (5,6) ausgerichtete und in etwa horizontale Schwenkachse (23) zulassen und ferner die Einleitung der Antriebskraft für die Arbeitsaggregate (5,6) über eine die Gelenkanordnung (20) durchsetzende Antriebsverbindung (46) erfolgt.

2. Aufhängung und Antriebsanordnung nach Anspruch 1, dadurch gekennzeichnet, daß die Gelenkanordnung (20) derartig an den Arbeitsaggregaten (5,6) angebracht ist, daß ihre in Fahrt- und Arbeitsrichtung (F) gerichtete Schwenkachse (22) in einer zumindest annähernd durch den Schwerpunkt der Arbeitsaggregate (5,6) verlaufenden, vertikalen und parallel zu einer vertikalen Längsmittelebene (24) des Trägerfahrzeuges (2) ausgerichteten Schnittebene (25) liegt.

3. Aufhängung und Antriebsanordnung nach Anspruch 1 und 2, dadurch gekennzeichnet, daß die annähernd vertikal ausgerichtete Schwenkachse (21) der Gelenkanordnung (20) in einer vertikalen und quer zur längsten Ausrichtung der Arbeitsaggregate (5,6) sich erstreckenden Mittelebene (26) der Arbeitsaggregate (5,6) angeordnet ist.

4. Aufhängung und Antriebsanordnung nach einem der Ansprüche 1 bis 3, dadurch gekennzeichnet, daß die in Richtung der längsten Ausrichtung der Arbeitsaggregate (5,6) ausgerichtete Schwenkachse (23) so angeordnet ist, daß sich die Schwenkachsen (21,22,23) der Gelenkanordnung (20) in einem Kreuzungspunkt schneiden.

5. Aufhängung und Antriebsanordnung nach einem der Ansprüche 1 bis 4, dadurch gekennzeichnet, daß der Schnittpunkt der in Richtung der längsten Ausrichtung der Arbeitsaggregate (5,6) ausgerichteten Schwenkachse (23) und der annähernd vertikal ausgerichteten Schwenkachse (21) der Gelenkanordnung (20) oberhalb vom Schnittpunkt der annähernd vertikal ausgerichteten Schwenkachse (21) und der in Fahrt- und Arbeitsrichtung (F) gerichteten Schwenkachse (22) liegt.

6. Aufhängung und Antriebsanordnung nach einem der Ansprüche 1 bis 5, dadurch gekennzeichnet, daß der Schnittpunkt der in Richtung der längsten Ausrichtung der Arbeitsaggregate (5,6) ausgerichteten Schwenkachse (23) und der annähernd vertikal ausgerichteten Schwenkachse (21) der Gelenkanordnung (20) bzw. der Kreuzungspunkt der drei Schwenkachsen (21,22,23) der Gelenkanordnung (20) bei Betrachtung der Arbeitsaggregate (5,6) in Arbeitsstellung (Fig. 1) einer durch die Mittelpunkte der Arbeitswerkzeuge der Arbeitsaggregate (5,6), insbesondere einer durch die Mittelpunkte der Schneidelemente (12) der Mäh- und Aufbereitungseinheit (8) verlaufenden, in etwa vertikalen sich quer zur Fahrt- und Arbeitsrichtung (F) erstreckenden Schnittebene (27) bezüglich der Fahrt- und Arbeitsrichtung (F) nachgeordnet ist.

7. Aufhängung und Antriebsanordnung nach einem der Ansprüche 1 bis 6, dadurch gekennzeichnet, daß der Schnittpunkt der in Richtung der längsten Ausrichtung der Arbeitsaggregate (5,6) ausgerichteten Schwenkachse (23) und der annähernd vertikal ausgerichteten Schwenkachse (21) der Gelenkanordnung (20) bzw. der Kreuzungspunkt der drei Schwenkachsen (21,22,23) der Gelenkanordnung (20) bei Betrachtung der Arbeitsaggregate (5,6) in Arbeitsstellung (Fig.1) in einer durch die Mittelpunkte der Arbeitswerkzeuge der Arbeitsaggregate (5,6), insbesondere in einer durch die Mittelpunkte der Schneidelemente (12) der Mäh- und Aufbereitungseinheit (8) verlaufenden, in etwa vertikalen Schnittebene (27) liegt.

8. Aufhängung und Antriebsanordnung nach einem der Ansprüche 1 bis 7, dadurch gekennzeichnet, daß der Schwenkwinkel der Arbeitsaggregate (5,6) um die annähernd vertikal ausgerichtete Schwenkachse (21) bezüglich der Fahrt- und Arbeitsrichtung (F) manuell und ungeregelt veränderbar ist.

9. Aufhängung und Antriebsanordnung nach einem der Ansprüche 1 bis 7, dadurch gekennzeichnet, daß der Schwenkwinkel der Arbeitsaggregate (5,6) um die annähernd vertikal ausgerichtete Schwenkachse (21) bezüglich der Fahrt- und Arbeitsrichtung (F) in Abhängigkeit von Fahr- und Arbeitsparametern geregelt verstellbar ist.

10. Aufhängung und Antriebsanordnung nach einem der Ansprüche 1 bis 9, dadurch gekennzeichnet, daß die Arbeitsaggregate (5,6) als baugleiche Mäh- und Aufbereitungseinheiten (8) ausgeführt sind.

11. Aufhängung und Antriebsanordnung nach einem der Ansprüche 1 bis 10, dadurch gekennzeichnet, daß der vordere Abschnitt der Gelenkanordnung (20) von einem um die in Fahrt- und Arbeitrichtung (F) gerichtete Schwenkachse (22) am äußeren Ende eines Ausleger- und Tragarmes (13,14) frei pendelnd gelagerten, ersten Tragelement (28) gebildet wird.

12. Aufhängung und Antriebsanordnung nach einem der Ansprüche 1 bis 11, dadurch gekennzeichnet, daß der hintere Abschnitt der Gelenkanordnung (20) aus einem, um die in Richtung der längsten Ausrichtung der Mäh- und Aufbereitungseinheit (8) ausgerichtete Schwenkachse (23) schwenkbar, an einem Traggestell (29) der Mäh- und Aufbereitungseinheit (8) gelagerten zweiten Tragelement (30) besteht.

13. Aufhängung und Antriebsanordnung nach Anspruch 12, dadurch gekennzeichnet, daß das am Traggestell (29) der Mäh- und Aufbereitungseinheit (8) schwenkbar angebrachte, zweite Tragelement (30) um die annähernd vertikal ausgerichtete Schwenkachse (21) der Gelenkanordnung (20) schwenkbar mit dem an dem Ausleger- und Tragarm (13,14) gelagerten, ersten Tragelement (28) verbunden ist.

14. Aufhängung und Antriebsanordnung nach Anspruch 12 und 13, dadurch gekennzeichnet, daß das am Traggestell (29) der Mäh- und Aufbereitungseinheit (8) schwenkbar angebrachte, zweite Tragelement (30) um die annähernd vertikal ausgerichtete Schwenkachse (21) der Gelenkanordnung (20) schwenkbar mit dem an dem Ausleger- und Tragarm (13,14) gelagerten, ersten Tragelement (28) in einer das erste Tragelement (28) übergreifenden Art verbunden ist.

15. Aufhängung und Antriebsanordnung nach einem der Ansprüche 11 bis 14, dadurch gekennzeichnet, daß das an dem Ausleger- und Tragarm (13,14) pendelnd gelagerte, erste Tragelement (28) als kastenähnlicher Tragholm (31) mit aus diesem hinausragenden Traglaschen (32) ausgebildet ist.

16. Aufhängung und Antriebsanordnung nach Anspruch 15, dadurch gekennzeichnet, daß der kastenähnliche Tragholm (31) mittels zweier Lagerstellen (35,36) auf einem, lösbar mit dem Ausleger- und Tragarm (13,14) verbundenen Lagerzapfen (37) pendelnd gelagert ist.

17. Aufhängung und Antriebsanordnung nach Anspruch 16, dadurch gekennzeichnet, daß der Lagerzapfen (37) als Hohlwelle ausgeführt ist.

18. Aufhängung und Antriebsanordnung nach einem der Ansprüche 12 bis 14, dadurch gekennzeichnet, daß das am Traggestell (29) der Mäh- und Aufbereitungseinheit (8) gelagerte, zweite Tragelement (30) als geschlossener, viereckförmiger Tragbügel (33) mit einer Betätigungslasche (34) ausgebildet ist.

19. Aufhängung und Antriebsanordnung nach Anspruch 18, dadurch gekennzeichnet, daß der viereckförmige Tragbügel (33) mittels Lagerbolzen (38,39) im Traggestell (29) der Mäh- und Aufbereitungseinheit (8) gelagert ist.

20. Aufhängung und Antriebsanordnung nach einem der Ansprüche 1 bis 19, dadurch gekennzeichnet, daß die Mäh- und Aufbereitungseinheit (8) um die in Richtung ihrer längsten Ausrichtung ausgerichtete Schwenkachse (23) über ein Stellglied (42) schwenk- und feststellbar ist.

21. Aufhängung und Antriebsanordnung nach Anspruch 20, dadurch gekennzeichnet, daß das Stellglied (42) als eine ein Verstellgewinde ausweisende Verdrehspindel (41) ausgebildet ist.

22. Aufhängung und Antriebsanordnung nach einem der Ansprüche 18 bis 21, dadurch gekennzeichnet, daß die am Tragbügel (33) der Gelenkanordnung (20) aufgehängte Mäh- und Aufbereitungseinheit (8) über ein weiteren Stellmittel (43) um die annähernd vertikal ausgerichtete Schwenkachse (21) gegenüber dem kastenähnlichen Tragholm (31) schwenk- und arretierbar ist.

23. Aufhängung und Antriebsanordnung nach Anspruch 22, dadurch gekennzeichnet, daß das Stellmittel (43) als eine mittels einer Kontermutter (44) gegen Verdrehung gesicherte Verstellspindel (45) ausgeführt ist.

24. Aufhängung und Antriebsanordnung nach Anspruch 22, dadurch gekennzeichnet, daß das Stellmittel (43) als eine hydraulische Kolben- Zylinder-Anordnung ausgebildet ist, welche durch vorgeschaltete Sperrventile in der jeweiligen Einstellposition fixierbar sein kann.

25. Aufhängung und Antriebsanordnung nach Anspruch 22, dadurch gekennzeichnet, daß das Stellmittel (43) ein elektrischer Linearantriebsmotor ist.

26. Aufhängung und Antriebsanordnung nach einem der Ansprüche 1 bis 25, dadurch gekennzeichnet, daß ein Aufbereiter (10) der Mäh- und Aufbereitungseinheit (8) gegenüber einem Mähwerk (9) der Mäh- und Aufbereitungseinheit (8) im mittleren Bereich geteilt ausgeführt ist und daß sich zwischen den jeweiligen Abschnitten (51,52) des Aufbereiters (10) Teile einer Antriebsanordnung (50) zum Antrieb der Mäh- und Aufbereitungseinheit (8) befinden.

27. Aufhängung und Antriebsanordnung nach einem der Ansprüche 1 bis 26, dadurch gekennzeichnet, daß ein Hauptgetriebe (47) wenigstens eine annähernd in und wenigstens eine annähernd entgegen der Fahrt- und Arbeitsrichtung (F) zeigende Eingangswelle (53,54) aufweist, von denen wahlweise eine angetrieben wird und daß mittels einer ersten Antriebsverzweigung (56) mit wenigstens einer in Richtung der längsten Ausrichtung der Mäh- und Aufbereitungseinheit (8) sich erstreckende Ausgangswelle (57) ein Antrieb des Aufbereiters (10) erfolgt und über eine zweite Antriebsverzweigung (58) und einer weiteren Ausgangswelle (59) eine Antriebsverbindung (48) zu dem Mähwerk (9) der Mäh- und Aufbereitungseinheit (8) herstellbar ist.

28. Aufhängung und Antriebsanordnung nach einem der Ansprüche 1 bis 27, dadurch gekennzeichnet, daß die die Mäh- und Aufbereitungseinheit (8) tragende Gelenkanordnung (20) von einer zum Hauptgetriebe (47) der Mäh- und Aufbereitungseinheit (8) führenden Antriebsverbindung (46) durchsetzt ist.

29. Aufhängung und Antriebsanordnung nach einem der Ansprüche 1 bis 28, dadurch gekennzeichnet, daß die Mittelachse der Hauptantriebswelle (80) der Antriebsverbindung (46) mit der in Fahrt- und Arbeitsrichtung (F) ausgerichteten Schwenkachse (22) der Gelenkanordnung (20) übereinstimmt.

30. Aufhängung und Antriebsanordnung nach einem der Ansprüche 1 bis 29, dadurch gekennzeichnet, daß die Antriebsverbindung (46) zum Hauptgetriebe (47) der Mäh- und Aufbereitungseinheit (8) ein Doppelkreuzgelenk (81) aufweist.

31. Aufhängung und Antriebsanordnung nach einem der Ansprüche 27 bis 30, dadurch gekennzeichnet, daß die Antriebsverbindung (48) von der Ausgangswelle (59) des Hauptgetriebes (47) zu einer im mittleren Bereich des Mähwerkes (9) und bezüglich der Fahrt- und Arbeitsrichtung (F) hinter den Schneidelementen (12) des Mähwerkes (9) angeordneten und zumindest in etwa vertikal ausgerichteten Antriebswelle (49) des Mähwerkes (9) führt.

32. Aufhängung und Antriebsanordnung nach einem der Ansprüche 27 bis 31, dadurch gekennzeichnet, daß die zumindest annähernd in und die zumindest annähernd entgegen der Fahrt- und Arbeitsrichtung (F) zeigenden Eingangswellen (53,54) als eine Durchgangswelle (55) ausgeführt sind.

33. Aufhängung und Antriebsanordnung nach einem der Ansprüche 27 bis 32, dadurch gekennzeichnet, daß die erste Antriebsverzweigung (56) des Hauptgetriebes (47) eine Übersetzungsstufe (60) mit unveränderlicher Übersetzung und eine Übersetzungsstufe (63) mit veränderbarer Übersetzung beinhaltet.

34. Aufhängung und Antriebsanordnung nach Anspruch 33, dadurch gekennzeichnet, daß die Übersetzungsstufe (63) mit veränderbarer Übersetzung zumindest zwei wählbare Übersetzungen aufweist.

35. Aufhängung und Antriebsanordnung nach Anspruch 34, dadurch gekennzeichnet, daß zwischen den zumindest zwei wählbaren Übersetzungen der Übersetzungsstufe (63) schaltbar gewechselt werden kann.

36. Aufhängung und Antriebsanordnung nach Anspruch 33, dadurch gekennzeichnet, daß die Übersetzungsstufe (60) mit unveränderlicher Übersetzung von einer Stirnradstufe mit den Stirnräder (61,62) gebildet wird.

37. Aufhängung und Antriebsanordnung nach einem der Ansprüche 33 bis 35, dadurch gekennzeichnet, daß die Übersetzungsstufe (63) mit veränderbarer Übersetzung aus zwei Kegelradstufen (64,65) mit den Kegelrädern (66,67,68,69) besteht.

38. Aufhängung und Antriebsanordnung nach einem der Ansprüche 33 bis 37, dadurch gekennzeichnet, daß die auf der Ausgangswelle (57) des Hauptgetriebes (47) zum Antrieb des Aufbereiters (10) angeordneten Kegelräder (67,69) jeweils eine als Klauenkupplung ausgeführte Schaltkupplung (70,71) aufweisen.

39. Aufhängung und Antriebsanordnung nach Anspruch 38, dadurch gekennzeichnet, daß die Schaltkupplungen (70,71) von außerhalb des Hauptgetriebes (47) über einen Schalthebel (72) schaltbar sind.

40. Aufhängung und Antriebsanordnung nach einem der Ansprüche 26 bis 39, dadurch gekennzeichnet, daß die Aufbereiterwalzen (76,77) des Aufbereiters (10) von einem ein- oder beidseitig von dem Hauptgetriebe (47) befindlichen Riementrieb (78,79) antreibbar sind.

41. Aufhängung und Antriebsanordnung nach einem der Ansprüche 27 bis 40, dadurch gekennzeichnet, daß die zweite Antriebsverzweigung (58) des Hauptgetriebes (47) von einer weiteren Kegelradstufe (73) mit den Kegelrädern (74,75) gebildet wird.

## Claims

1. Suspension and driving arrangement for working implements (5, 6), particularly a mowing unit or a mowing and processing unit for the harvesting of agricultural stalk crops, in which for the vertically movable suspension of each working implement on the chassis of the carrier vehicle there is a jib arm mounted to pivot about an axis orientated approximately in the travelling and working direction (F) of the carrier vehicle and which, together with a working implement (5 or 6) can, by means of a piston-cylinder arrangement articulated on the chassis and on the jib arm, be moved out of a substantially horizontal working position into a nearly vertical transit position and with, disposed between the outer end of the jib arm and the middle region of the working implement (5, 6) an articulating arrangement which functions as a connecting member with a pivot axis directed in the travelling and working direction (F), characterised in that the articulating arrangement (20) is constructed as a unit situated in the middle of the working implement (5, 6) extending crosswise to the travelling and working direction (F) and which has, alongside the horizontal pivot axis (22) which is situated in the travelling and working direction (F), two further pivot axes (21 and 23) which allow a pivoting and locking of the working implements (5, 6), when viewed in the working position, about an approximately vertically orientated pivot axis (1) and in a substantially horizontal pivot axis (23) orientated in the direction of the longest orientation of the working implements (5, 6) and, furthermore, in that initiation of the driving force for the working implements (5, 6) takes place via a driving connection (46) which passes through the articulating arrangement (20).

2. Suspension and driving arrangement according to claim 1, characterised in that the articulating arrangement (20) is so mounted on the working implements (5, 6) that their pivot axis (22) which is directed in the travelling and working direction (F) lies in an intersecting plane (25) extending at least approximately through the centre of gravity of the working implements (5, 6) and which is vertical and orientated parallel with a vertical longitudinal central plane (24) through the carrier vehicle (2).

3. Suspension and driving arrangement according to claim 1 and 2, characterised in that the approximately vertically orientated pivot axis (21) of the articulating arrangement (20) is disposed in a vertical central plane (26) through the working implements (5, 6) and which extends crosswise to the longest orientation of the working implements (5, 6).

4. Suspension and driving arrangement according to one of claims 1 to 3, characterised in that the pivot axis (23) orientated in the direction of the longest orientation of the working implements (5, 6) is so disposed that the pivot axes (21, 22, 23) of the articulating arrangement (20) intersect at a crossing point.

5. Suspension and driving arrangement according to one of claims 1 to 4, characterised in that the point of intersection of the pivot axis (23) which is orientated in the direction of the longest orientation of the working implements (5, 6) and of the approximately vertically orientated pivot axis (21) of the articulating arrangement (20) lies above the point of intersection of the approximately vertically orientated pivot axis (21) and of the pivot axis (22) which is directed in the travelling and working direction (F).

6. Suspension and driving arrangement according to one of claims 1 to 5, characterised in that the point of intersection of the pivot axis (23) which is orientated in the direction of the longest orientation of the working implements (5, 6) and of the approximately vertically orientated pivot axis (21) of the articulating arrangement (20) or the crossing point of the three pivot axes (21, 22, 23) of the articulation arrangement (20), when viewing the working implements (5, 6) in the working position (Fig. 1) is disposed, with reference to the travelling and working direction (F), downstream of an intersecting plane (27) extending through the centre points of the tools of the working implements (5, 6), particularly an intersecting plane (27) passing through the centre points of the cutting elements (12) of the mowing and processing unit (8) and substantially vertically crosswise to the travelling and working direction (F).

7. Suspension and driving arrangement according to one of claims 1 to 6, characterised in that the point of intersection of the pivot axis (23) orientated in the direction of the longest orientation of the working implements (5, 6) and of the approximately vertically orientated pivot axis (21) of the articulation arrangement (20) or the crossing point of the three pivot axes (21, 22, 23) of the articulation arrangement (20), when viewing the working implements (5, 6) in the working position (Fig. 1), lies in a substantially vertical intersecting plane (27) extending through the centre points of the working tools of the working implements (5, 6). particularly one which extends through the centre points of the cutting elements (12) of the mowing and processing unit (8).

8. Suspension and driving arrangement according to one of claims 1 to 7, characterised in that the pivot angle of the working implements (5, 6) about the approximately vertically orientated pivot axis (21) is, in relation to the travelling and working direction (F), capable of manual and unregulated variation.

9. Suspension and driving arrangement according to one of claims 1 to 7, characterised in that the pivot angle of the working implements (5, 6) about the approximately vertically orientated pivot axis (21) is, in relation to the travelling and working direction (F), capable of controlled variation as a function of travelling and working parameters.

10. Suspension and driving arrangement according to one of claims 1 to 9, characterised in that the working implements (5, 6) are constructed as structurally identical mowing and processing units (8).

11. Suspension and driving arrangement according to one of claims 1 to 10, characterised in that the front portion of the articulation arrangement (20) is formed by a first carrier element (28) mounted to float freely at the outer end of a jib and carrier arm (13, 14) about a pivot axis (22) directed in the travelling and working direction (F).

12. Suspension and driving arrangement according to one of claims 1 to 11, characterised in that the rear portion of the articulation arrangement (20) consists of a second carrier element (30) mounted on a supporting frame (29) of the mowing and processing unit (8) and pivotable about a pivot axis (23) orientated in the direction of the longest orientation of the mowing and processing unit (8).

13. Suspension and driving arrangement according to claim 12, characterised in that the second carrier element (30) pivotally mounted on the carrier frame (29) of the mowing and processing unit (8) is connected to the first carrier element (28) which is mounted on the jib and carrier arm (13, 14) so as to be pivotable about the approximately vertically orientated pivot axis (21) of the articulation arrangement (20).

14. Suspension and driving arrangement according to claim 12 and 13, characterised in that the second carrier element (30) pivotally mounted on the carrier frame (29) of the mowing and processing unit (8) is connected to the first carrier clement (28) in such a way that it engages over the first carrier element (28), the said first carrier element (28) being mounted to pivot about the approximately vertically orientated pivot axis (21) of the articulation arrangement (20).

15. Suspension and driving arrangement according to one of claims 11 to 14, characterised in that the first carrier element (28) which is mounted to float freely on the jib and carrier arm (13, 14) is constructed as a box-like supporting member (31) from which project support plates (32).

16. Suspension and driving arrangement according to claim 15, characterised in that the box-like carrier member (31) is, by means of two bearing points (35, 36), mounted to float freely on a bearing journal (37) separably connected to the jib and carrier arm (13, 14).

17. Suspension and driving arrangement according to claim 16, characterised in that the bearing journal (37) is constructed as a hollow shaft.

18. Suspension and driving arrangement according to one of claims 12 to 14, characterised in that the second carrier element (30) mounted on the carrier frame (29) of the mowing and processing unit (8) is constructed as a closed quadrilaterally shaped angled support member (33) with an actuating plate (34).

19. Suspension and driving arrangement according to claim 18, characterised in that the quadrilaterally shaped curved support member (33) is mounted by means of bearing bolts (38, 39) in the carrier frame (29) of the mowing and processing unit (8).

20. Suspension and driving arrangement according to one of claims 1 to 19, characterised in that the mowing and processing unit (8) is, via a positioning member (42), adapted to be pivoted about the pivot axis (23) which is orientated in the direction of its longest orientation and locked.

21. Suspension and driving arrangement according to claim 20, characterised in that the positioning member (42) is constructed as a rotating spindle (41) which has a screw thread for adjustment.

22. Suspension and driving arrangement according to one of claims 18 to 21, characterised in that the mowing and processing unit (8) which is suspended on the curved carrier member (33) of the articulation arrangement (20) is pivotable about the approximately vertically orientated pivot axis (21) and in relation to the box-like carrier member (31) and is capable of being locked.

23. Suspension and driving arrangement according to claim 22, characterised in that the positioning means (43) is constructed as an adjusting spindle (45) which is secured against rotation by means of a lock nut (44).

24. Suspension and driving arrangement according to claim 22, characterised in that the positioning means (43) is constructed as an hydraulic piston-cylinder arrangement which can be adapted to be fixed in the respective adjusted position by means of precedent check valves.

25. Suspension and driving arrangement according to claim 22, characterised in that the positioning means (43) is an electric linear drive motor.

26. Suspension and driving arrangement according to one of claims 1 to 25, characterised in that a processor (10) of the mowing and processing unit (8) is divided in its central portion opposite a mowing unit (9) of the mowing and processing unit (8) and in that there are between the respective portions (41, 42) of the processor (10) parts of a driving arrangement (50) for driving the mowing and processing unit (8).

27. Suspension and driving arrangement according to one of claims 1 to 26, characterised in that a main transmission unit (47) comprises at least one input shaft (53, 54) pointing approximately in and at least one which points approximately against the travelling and working direction (F) and of which optionally one is driven and in that by means of a first driving branching (56) with at least one output shaft (57) extending in the direction of the longest orientation of the mowing and processing unit (8), there is a drive for the processor (10) while via a second drive branching (58) and a further output shaft (59), it is possible to establish a driving connection (48) to the mowing unit (9) ofthe mowing and processing unit (8).

28. Suspension and driving arrangement according to one of claims 1 to 27, characterised in that the articulation arrangement (20) carrying the mowing and processing unit (8) has passing through it a driving connection (46) leading to the main transmission unit (47) of the mowing and processing unit (8).

29. Suspension and driving arrangement according to one of claims 1 to 28, characterised in that the central axis of the main drive shaft (80) of the driving connection (46) coincides with the pivot axis (22) of the articulation arrangement (20) which is orientated in the travelling and working direction (F).

30. Suspension and driving arrangement according to one of claims 1 to 29, characterised in that the driving connection (46) to the main transmission unit (47) of the mowing and processing unit (8) has a double-crossed joint (81).

31. Suspension and driving arrangement according to one of claims 27 to 30, characterised in that the driving connection (48) leads from the output shaft (59) of the main transmission unit (47) to an at least substantially vertically orientated drive shaft (49) disposed in the middle portion of the mowing unit (9) and, in relation to the driving and working direction (F), behind the cutting elements (12) of the mowing unit (9).

32. Suspension and driving arrangement according to one of claims 27 to 31, characterised in that the input shafts (53, 54) pointing at least approximately in and approximately against the travelling and working direction (F) are constructed as a through-shaft (55).

33. Suspension and driving arrangement according to one of claims 27 to 32, characterised in that the first driving branch (56) of the main transmission unit (47) comprises a transmission stage (60) with invariable transmission and a transmission stage (63) with variable transmission.

34. Suspension and driving arrangement according to claim 33, characterised in that the transmission stage (63) with variable transmission comprises at least two selectable transmissions.

35. Suspension and driving arrangement according to claim 34, characterised in that it is possible alternately to switch between the at least two selectable transmissions of the transmission stage (63).

36. Suspension and driving arrangement according to claim 33, characterised in that the transmission stage (60) with invariable transmission is constituted by a spur gear stage with spur gears (61, 62).

37. Suspension and driving arrangement according to one of claims 33 to 35, characterised in that the transmission stage (63) with the variable transmission consists of two bevel gear stages (64, 65) with bevel gears (66, 67, 68, 69).

38. Suspension and driving arrangement according to one of claims 33 to 37, characterised in that the bevel gears (67, 69) disposed on the output shaft (57) of the main transmission unit (47) for driving the processor (10) in each case have a switchable clutch (70, 71) constructed as a dog clutch.

39. Suspension and driving arrangement according to claim 38, characterised in that the switchable clutches (70, 71) can be switched from outside the main transmission unit (47) by means of a shift lever (72).

40. Suspension and driving arrangement according to one of claims 26 to 39, characterised in that the processing rollers (76, 77) of the processor (10) are adapted to be driven by a belt transmission (78, 79) disposed on one or both sides of the main transmission unit (47).

41. Suspension and driving arrangement according to one of claims 27 to 40, characterised in that the second drive branch (58) of the main transmission unit (47) is formed by a further bevel gear stage (73) with bevel gears (74, 75).

## Revendications

1. Dispositif de suspension et d'entraînement de machines (5, 6) installées d'un côté ou des deux côtés d'un véhicule porteur, notamment unité de fauche ou unité de fauche et de préparation pour récolter des végétaux en forme de tiges, comprenant :
• un bras de déploiement monté pivotant autour d'un axe aligné sensiblement dans la direction de déplacement et de travail (F) du véhicule porteur, pour assurer la suspension mobile en hauteur de chaque machine sur le châssis du véhicule porteur,
• ce bras pouvant passer avec la machine (5 ou 6) et à l'aide d'un vérin articulé sur le châssis du véhicule et sur le bras, d'une position active sensiblement horizontale dans une position de transport sensiblement verticale,
• un dispositif articulé entre l'extrémité extérieure du bras de déploiement et la zone intermédiaire de la machine (5, 6) comme élément de liaison ayant un axe de pivotement dirigé dans la direction de déplacement et de travail (F),
caractérisé en ce que
• le dispositif d'articulation (20) est en forme d'unité située au milieu de la machine (5, 6) s'étendant transversalement à la direction de déplacement et de travail (F) et,
• à côté de l'axe de basculement (22), horizontal, situé dans la direction de déplacement et de travail (F), il comporte deux autres axes de basculement (21, 23) permettant une opération de basculement et de blocage des machines (5, 6) autour d'un axe de basculement (21) sensiblement vertical lorsqu'on regarde en position de travail et d'un axe de basculement (23) sensiblement horizontal dans la direction de la plus grande longueur de la machine (5, 6), et la transmission de la force motrice de la machine (5, 6) se fait par une liaison d'entraînement (46) traversant le dispositif articulé (20).

2. Dispositif selon la revendication 1,
caractérisé en ce que
le dispositif articulé (20) est installé sur les machines (5, 6) pour que son axe de basculement (22) dirigé dans la direction de déplacement et de travail (F) se situe dans un plan de coupe (25) passant au moins approximativement par le centre de gravité des machines (5, 6), vertical, et parallèle au plan longitudinal médian vertical (24) du véhicule porteur (2) .

3. Dispositif selon les revendications 1 et 2,
caractérisé en ce que
l'axe de basculement (21) du dispositif d'articulation (20) aligné sensiblement verticalement se trouve dans un plan médian (26) des machines (5, 6), verticale et s'étendant transversalement à la direction de la plus grande longueur des machines (5, 6).

4. Dispositif selon l'une quelconque des revendications 1 à 3,
caractérisé en ce que
l'axe de basculement (23) aligné dans la direction de la plus grande longueur des machines (5, 6) est disposé de façon que les axes de basculement (21, 22, 23) du dispositif articulé (20) se coupent en un point d'intersection.

5. Dispositif selon l'une quelconque des revendications 1 à 4,
caractérisé en ce que
le point d'intersection de l'axe de basculement (23) aligné dans la direction de la plus grande longueur des machines (5, 6) et l'axe de basculement (21) du dispositif d'articulation (20), aligné sensiblement verticalement, se situe au-dessus du point d'intersection de l'axe de basculement (21) aligné sensiblement verticalement et de l'axe de basculement (22) situé dans la direction de déplacement et de travail (F).

6. Dispositif selon l'une quelconque des revendications 1 à 5,
caractérisé en ce que
le point d'intersection de l'axe de basculement (23) aligné dans la direction de la plus grande longueur des machines (5, 6) et de l'axe de basculement (21) aligné sensiblement verticalement, appartenant au dispositif d'articulation (20) ou le point d'intersection des trois axes de basculement (21, 22, 23) du dispositif d'articulation (20) lorsqu'on considère les machines (5, 6) en position de travail (figure 1) se situe en aval selon la direction de déplacement et de travail (F) d'un plan de coupe (27), passant par le centre des outils des machines (5, 6), notamment par le centre des éléments de coupe (12) de l'unité de fauche et de préparation (8), et s'étendant dans une direction sensiblement verticale transversale à la direction de déplacement et de travail (F).

7. Dispositif selon l'une quelconque des revendications 1 à 6,
caractérisé en ce que
le point d'intersection de l'axe de basculement (23) aligné dans la direction de la plus grande longueur des machines (5, 6) et de l'axe de basculement (21), dirigé sensiblement verticalement du dispositif d'articulation (2) ou le point d'intersection des trois axes de basculement (21, 22, 23) du dispositif d'articulation (20), lorsque les machines (5, 6) sont en position de travail (figure 1), se trouve dans un plan de coupe (27) sensiblement vertical, passant par le centre des outils des machines (5, 6), notamment dans un plan passant par le centre des éléments de coupe (12) de l'unité de fauche et de préparation (8).

8. Dispositif selon l'une quelconque des revendications 1 à 7,
caractérisé en ce que
l'angle de basculement de la machine (5, 6) autour de l'axe de basculement (21) aligné sensiblement verticalement peut être modifié manuellement par rapport à la direction de déplacement et de travail (F) et de façon non régulée.

9. Dispositif selon l'une quelconque des revendications 1 à 7,
caractérisé en ce que
l'angle de basculement des machines (5, 6) autour de l'axe de basculement (21) aligné sensiblement verticalement est réglable par rapport à la direction de déplacement et de travail (F) en fonction de paramètres de déplacement et de travail.

10. Dispositif selon l'une quelconque des revendications 1 à 9,
caractérisé en ce que
les machines (5, 6) sont des unités de fauche et de préparation (8) de même construction.

11. Dispositif selon l'une quelconque des revendications 1 à 10,
caractérisé en ce que
le segment avant du dispositif d'articulation (20) est formé par un premier élément de support (28) monté oscillant librement autour de l'axe de basculement (22) dirigé dans la direction de déplacement et de travail (F), à l'extrémité extérieure d'un bras de déploiement et de support (13, 14).

12. Dispositif selon l'une quelconque des revendications 1 à 11,
caractérisé en ce que
le segment arrière du dispositif d'articulation (20) se compose d'un second élément de support (30), pivotant autour d'un axe de basculement (23) aligné dans la direction de la plus grande longueur de l'unité de fauche et de préparation (8), en étant monté sur le châssis (29) de l'unité (8).

13. Dispositif selon la revendication 12,
caractérisé en ce que
le second élément de support (30) monté de manière pivotante sur le châssis (29) de l'unité de fauche et de préparation (8), est relié de manière basculante autour de l'axe de basculement (21) du dispositif d'articulation (20) aligné sensiblement verticalement, au premier élément de support (28) monté sur le bras de support et de déploiement (13, 14).

14. Dispositif selon les revendications 12 et 13,
caractérisé en ce que
le second élément de support (30) monté basculant sur le châssis (29) de l'unité de fauche et de préparation (8), et pivotant, autour de l'axe de basculement (21) aligné sensiblement verticalement et appartenant au dispositif d'articulation (20), est relié premier élément de support (28) monté sur le bras de déploiement et de support (13, 14), de manière à chevaucher le premier élément de support (28).

15. Dispositif selon l'une des revendications 11 à 14,
caractérisé en ce que
le premier élément de support (28) monté de manière oscillante sur le bras de débattement et de support (13, 14) est réalisé sous la forme d'un longeron en caisson (31) muni de pattes de support (32) dépassant du caisson.

16. Dispositif selon la revendication 15,
caractérisé en ce que
le longeron en caisson (31) est monté de manière oscillante par l'intermédiaire de deux paliers (35, 36) sur un tourillon de palier (37) relié de manière amovible au bras de déploiement et de support (13, 14).

17. Dispositif selon la revendication 16,
caractérisé en ce que
le tourillon de palier (37) est un arbre creux.

18. Dispositif selon l'une quelconque des revendications 12 à 14,
caractérisé en ce que
le second élément de support (30) monté sur le châssis (29) de l'unité de fauche et de préparation (8) est réalisé sous la forme d'un étrier quadrangulaire (33), fermé, ayant une patte d'actionnement (34).

19. Dispositif selon la revendication 18,
caractérisé en ce que
l'étrier de support (33) quadrangulaire, est monté par des tourillons de palier (38, 39) dans le châssis (29) de l'unité de fauche et de préparation (8).

20. Dispositif selon l'une quelconque des revendications 1 à 19,
caractérisé en ce que
l'unité de fauche et de préparation (8) est montée pivotante et susceptible d'être bloquée par un organe de réglage (42), autour de l'axe de basculement (23) aligné dans la direction de la plus grande longueur de l'unité (8).

21. Dispositif selon la revendication 20,
caractérisé en ce que
l'organe de réglage (42) est une manivelle (41) munie d'un filetage de réglage.

22. Dispositif selon l'une quelconque des revendications 18 à 21,
caractérisé en ce que
l'unité de fauche et de préparation (8) suspendue à l'étrier (33) du dispositif d'articulation (20) est montée de manière pivotante autour de l'axe de basculement (21) aligné pratiquement verticalement, et peut être bloquée par rapport au longeron de support (31) en forme de caisson, par l'intermédiaire d'un autre moyen de réglage (43).

23. Dispositif selon la revendication 22,
caractérisé en ce que
le moyen de réglage (43) est réalisé sous la forme d'une broche de réglage (45) qui se bloque en rotation par un contre-écrou (44).

24. Dispositif selon la revendication 22,
caractérisé en ce que
le moyen de réglage (43) est un vérin hydraulique qui peut se bloquer dans n'importe quelle position de réglage par une vanne de blocage en amont.

25. Dispositif selon la revendication 22,
caractérisé en ce que
le moyen de réglage (43) est un moteur électrique linéaire.

26. Dispositif selon l'une quelconque des revendications 1 à 25,
caractérisé en ce qu'
• un dispositif de préparation (10) de l'unité de fauche et de préparation (8) est divisé dans la zone centrale par rapport au mécanisme de fauche (9) de l'unité de fauche et de préparation (8), et
• entre les sections respectives (51, 52) du dispositif de préparation (10), il y a les pièces d'un dispositif d'entraînement (50) pour entraîner l'unité de fauche et de préparation (8).

27. Dispositif selon l'une quelconque des revendications 1 à 26,
caractérisé en ce qu'
• une transmission principale (47) comprend au moins un arbre d'entrée (53, 54) dirigé sensiblement dans la direction opposée à la direction de déplacement et de travail (F), et parmi ces arbres, au choix l'un est entraîné, et
• à l'aide d'une première dérivation d'entraînement (56), on entraîne le dispositif préparatoire (10) avec au moins un arbre de sortie (57) s'étendant dans la direction de la plus grande longueur de l'unité de fauche et de préparation (8), et par une seconde dérivation d'entraînement (58) et un autre arbre de sortie (59), on réalise une liaison d'entraînement (48) vers le mécanisme de fauche (9) de l'unité de fauche et de préparation (8).

28. Dispositif selon l'une quelconque des revendications 1 à 27,
caractérisé en ce que
le dispositif d'articulation (20) qui porte l'unité de fauche et de préparation (8) est traversé par une liaison d'entraînement (46) conduisant vers la transmission principale (47) de l'unité de fauche et de préparation (8).

29. Dispositif selon l'une quelconque des revendications 1 à 28,
caractérisé en ce que
l'axe géométrique de l'arbre principal d'entraînement (80) de la liaison de transmission (46) correspond à l'axe de basculement (22) du dispositif d'articulation (20) aligné sur la direction de déplacement et de travail (F).

30. Dispositif selon l'une quelconque des revendications 1 à 29,
caractérisé en ce que
la liaison d'entraînement (46) vers la transmission principale (47) de l'unité de fauche et de préparation (8) comporte une articulation à double croisillon (81).

31. Dispositif selon l'une quelconque des revendications 27 à 30,
caractérisé en ce que
la liaison d'entraînement (48) relie l'arbre de sortie (59) de la transmission principale (47), à un arbre d'entraînement (49) du mécanisme de fauche (9), aligné sensiblement verticalement et se trouvant dans la zone médiane du mécanisme de fauche (9) et derrière les éléments de coupe (12) de ce mécanisme de fauche (9), par rapport au sens de déplacement et de travail (F).

32. Dispositif selon l'une quelconque des revendications 27 à 31,
caractérisé en ce que
les arbres d'entrée (53, 54) dirigés au moins sensiblement dans la direction de déplacement et de travail (F) et au moins sensiblement dans la direction opposée, sont réalisés sous la forme d'un arbre traversant (55).

33. Dispositif selon l'une quelconque des revendications 27 à 32,
caractérisé en ce que
la première dérivation d'entraînement (56) de la transmission principale (47) comporte un étage démultiplicateur (60) à démultiplication fixe et un étage démultiplicateur (63) à démultiplication variable.

34. Dispositif selon la revendication 33,
caractérisé en ce que
l'étage de démultiplication (63) à démultiplication variable possède au moins deux démultiplications susceptibles d'être sélectionnées.

35. Dispositif selon la revendication 34,
caractérisé en ce qu'
on peut commuter en alternance l'étage de démultiplication (63) entre au moins les deux démultiplications susceptibles d'être sélectionnées.

36. Dispositif selon la revendication 33,
caractérisé en ce que
l'étage de démultiplication (60) à démultiplication fixe est constitué par un étage à pignons droits (61, 62).

37. Dispositif selon l'une quelconque des revendications 33, 35,
caractérisé en ce que
l'étage démultiplicateur (63) à démultiplication variable est formé de deux étages à pignons coniques (64, 65) et roues coniques (66, 67, 68, 69).

38. Dispositif selon l'une quelconque des revendications 33 à 37,
caractérisé en ce que
les pignons coniques (67, 69) montés sur l'arbre de sortie (57) de la transmission principale (47) pour entraîner le dispositif préparatoire (10) comportent chacun un embrayage commutable (70, 71) en forme d'embrayage à griffes.

39. Dispositif selon la revendication 38,
caractérisé en ce que
les embrayages à griffes (70, 71) peuvent être commutés à partir de l'extérieur de la transmission principale (47) par l'intermédiaire d'un levier de commutation (72).

40. Dispositif selon l'une quelconque des revendications 26 à 39,
caractérisé en ce que
les tambours préparatoires (76, 77) du dispositif préparatoire (10) sont entraînés à partir d'une transmission à courroie (78, 79) prévue d'un côté ou des deux côtés de la transmission principale (47).

41. Dispositif selon l'une quelconque des revendications 27 à 40,
caractérisé en ce que
la seconde dérivation d'entraînement (58) de la transmission principale (47) est formée par un autre étage à roues coniques (73) composé de roues coniques (74, 75).
